# EUROPEAN PATENT APPLICATION

(11) **EP 4 357 034 A1**
(43) Date of publication of application: **24.04.2024**
(21) Application number: 22824360.6
(22) Date of filing: 17.06.2022
(51) Int. Cl.: B06B 1/06, B64D 15/16, G01N 29/14

(54) **DEVICE FOR REMOVING AND PREVENTING THE FORMATION OF ICE ON SURFACES**

(30) Priority: 18.06.2021 ES 202130570
(71) Applicant: Consejo Superior de Investigaciones Científicas (CSIC), 41013 Sevilla (ES); Universidad De Sevilla, 41013 Sevilla (ES)
(72) Inventor: RICO GAVIRA, Victor, 41092 Sevilla (ES); BORRÁS MARTOS, Ana Isabel, 41092 Sevilla (ES); RODRÍGUEZ GONZÁLEZ-ELIPE, Agustín, 41092 Sevilla (ES); MONTES MONTAÑEZ, Laura, 41092 Sevilla (ES); LÓPEZ LÓPEZ, Marta, 41092 Sevilla (ES); GARCÍA VALENZUELA, Aurelio, 41092 Sevilla (ES); LÓPEZ SANTOS, Mª Carmen, 41013 Sevilla (ES); OLIVA RAMÍREZ, Manuel, 41013 Sevilla (ES)
(74) Representative: Pons
(86) International application number: PCT/ES2022/070383
(87) International publication number: WO 2022/263701

(57) **Abstract**

The present invention relates to a device comprising a piezoelectric or ferroelectric substrate (2) on which ice is deposited; electrodes (3), connected to the substrate (2); a vector network analyser (7), connected to the electrodes (3) and configured to determine the resonant frequency of the substrate (2); and an excitation module including a function generator (6) that communicates with the vector network analyser (7) and is connected to an amplifier (4), the amplifier being connected to the electrodes (3). The excitation module is configured to apply to the electrodes (3), by means of an automatic switch (8), an AC electrical signal having a frequency coinciding with the resonant frequency measured in the vector network analyser (7) and which changes gradually as the ice melts.

## Description

### OBJECT OF THE INVENTION

The present invention relates to a device for removing and/or preventing the formation of ice on surfaces, preventing its accumulation, and based on the propagation of acoustic waves on substrates with piezoelectric or ferroelectric activity. The interaction of such waves with the accumulations of ice causes their preferred melting in the area of the ice-surface interface, so that it is separated from the surface of the material with a reduced energy cost. Likewise, these acoustic waves as generated and used in the present invention, even those with a very low intensity, are very effective in preventing or minimising the formation of ice on the surface of these substrates.

### BACKGROUND OF THE INVENTION

The removal of ice from the surface of solids is fundamentally addressed by procedures that can be considered passive and others that are considered active. Passive methods are used to limit or prevent the formation of ice and are based on changing the properties of the surfaces of the materials to be protected so that they exhibit low adhesion to ice. This prevents the ice from tending to adhere to the surface and, if it has, it can be easily detached by shaking, wind or another simple procedure.

Icephobic surface coatings and treatments seek to provide materials with this property. Laser treatments, the application of special paints, coatings prepared by evaporation, plasma or other chemical processes are some of the procedures that modify the surfaces of materials and make them less likely to interact with ice and thus limit or prevent its accumulation.

Icephobic surfaces exhibit this quality as a result of a combination of a specific chemical composition and a defined surface roughness and/or topography. Partly related to these icephobic surfaces are some superhydrophobic surfaces that are characterised by repelling water as well as ice, although not all superhydrophobic surfaces are also icephobic.

Active systems start from a different premise and are based on promoting either the melting of the accumulated ice or its removal by melting the interface area between the ice and substrate.

Invasive methods that are based on projecting certain liquids onto accumulations of ice, a common practice in airport areas, should be explained in separate chapter.

In terms of the active methods, it is worth mentioning the methods based on Joule heating and on the use of ultrasound generated by devices, which is applied directly to the materials from which ice is to be removed. The use of heating through the Joule effect requires integrating or applying heaters and/or electrical resistors in or on the surfaces from which ice is to be removed. This procedure can be highly effective in terms of results, but its widespread use runs into problems of energy efficiency (high electricity consumption), electrical insulation problems, compatibility with plastic materials or other difficulties if it is to be applied on large surfaces.

The use of ultrasound through external generators that is applied to the areas to be thawed is a procedure developed in recent years and has been proposed for use in aeronautics, wind turbines and the automotive sector. Ultrasound in this context means mechanical waves, with long wavelengths, in the frequency range of KHz, which propagate by elastic means, being generated in piezoelectric actuators by alternating current (AC) electrical excitation. The main problems of this technology are the "focused" nature of the generator used, its damping after the mechanical excitation is moved small distances and the need to have to move the generator if ice is to be removed from large areas or surfaces. Energy cost is another factor that may discourage extensive use of this technology.

Documents that disclose different ways of generating and using ultrasound to thaw surfaces are known from the prior art in this field. For example, document US5172024A (THOMSON CSF) 1992-12-15 proposes the use of a thick layer of ferroelectric material with piezoelectric activity covered on both sides by extensive conductive layers that act as electrodes, with a flat capacitor-type configuration, to generate ultrasound waves and mechanically excite the assembly.

In other documents of the prior art such as WO2015/011064 A1 (ECHOVISTA SYSTEMS LTD) 2015-01-29 or CN102435027A (UNIV XI AN JIATONG) 2012-05-02, external piezoelectric applicators are used for activation with ultrasound and acoustic waves, respectively from windows, specifically vehicle windshields, to remove water droplets in the first case, or cold exchanger fins, to limit the formation of ice on them in this second case. In both cases, the surface to be activated is not a piezoelectric surface and the acoustic/ultrasound waves are generated by small, external piezoelectric applicators, attached to specific strategic points of the windows/fins. These elements are made of a totally different non-piezoelectric material although, especially in the case of window glass, they are capable of propagating the mechanical excitation of an acoustic wave.

On the other hand, there are documents such as US5051645A (JOHNSON SERVICE CO) 1991-09-24, which disclose the possibility of using sensors based on surface acoustic waves (SAW) to detect the formation of ice and/or the existence of water/ice transformations.

One recent publication in the Advanced Materials Interfaces journal (Nanoscale "Earthquake" Effect Induced by Thin Film Surface Acoustic Waves as a New Strategy for Ice Protection, Deyu Yang, Ran Tao, Xianghui Hou, Hamdi Torun, Glen McHale, James Martin, WongQing Fu, Advanced Materials Interfaces 2021, 8, 2001776) mentions the use of a supported ZnO layer to cause thawing through the propagation of surface acoustic waves generated using interdigitated electrodes (IDTs). The principles of this publication differ substantially from those included in the present invention in terms of fundamental aspects such as the self-supporting nature of the piezoelectric or ferroelectric materials, the fact of being able to use Lamb waves, the control of the resonance conditions and other aspects that are discussed later on.

### DESCRIPTION OF THE INVENTION

The device for removing and/or preventing the formation of ice on surfaces, object of the present invention, responds to the need to remove ice that accumulates on a large number of installations and devices, causing safety problems, loss of energy efficiency and even the destruction thereof. Preventing the formation of ice or limiting the amount of ice formed on an active surface, which forms the basis of the device of the present invention, is another related need that is directly addressed herein.

The industrial and economic activity fields where this need is manifested most urgently fall within activities related to transportation (one very obvious example, but not the only one, is aeronautics), construction, electricity transmission (power lines), energy use (wind turbines and solar panels) and in relation to the production of industrial cooling for preservation and a large number of applications. In this context, the destruction of resistant bacteria and/or viruses in low temperature conditions or the removal of bacterial films that survive in cold and frost conditions is an added technical effect of the present invention.

The present invention proposes the development of a piezoelectric or ferroelectric-based device that, activated with short-wavelength acoustic waves (AWs) in the MHz frequency range, allows the removal of ice formed on its surface, automatically adjusting the excitation frequency to the resonance conditions of the system. One related function is that of exerting an effective anti-icing action, preventing the formation of ice, even if environmental conditions favour it on an equivalent surface not subjected to any excitation process with AWs.

In other words, the present invention proposes the development of a device based on AWs, having a short wavelength, to automatically remove ice accumulations or limit their formation. Another essential feature of the present invention is that it does not use external piezoelectric applicators for localised use that are applied on non-piezoelectric substrates, but rather the device integrates the entire substrate to be activated, this substate having a piezoelectric or ferroelectric nature as a whole.

One condition for this propagation to occur is that the material from which the ice is to be removed has a piezoelectric or ferroelectric nature, or that the material exposed to ice has good AW transmission properties and is supported over the entire area of the piezoelectric or ferroelectric material.

In the present invention, acoustic waves (AWs) will be understood as the waves that are generated and propagate in the piezoelectric or ferroelectric material (typically Lamb waves) or that propagate on its surface (surface waves, typically of the Rayleigh type).

The context of this invention lies in the fact that for the short-wavelength frequency range, the resonance curve of ferroelectric and piezoelectric materials activated with a voltage from an AC electrical signal is very sensitive to temperature changes and, secondly, to the accumulation of water or the formation of ice on its surface. This change in the resonance curves means that the energy efficiency of the process for removing ice by means of acoustic activation is compromised if the operating frequency does not match the resonant frequency of the system. In the proposed invention, this limitation is overcome by measuring the resonance curves of the ferroelectric or piezoelectric material to adjust the excitation frequency to the resonance conditions of the assembly. One derivative of this principle is that the device itself can be used as a sensor element for sensing temperature changes and/or the accumulation of ice on the surface.

The acoustic waves referred to herein are generated by the excitation of the piezoelectric or ferroelectric material through the application of short-wavelength AC electrical signals, generally in the MHz range. Its generation and propagation require the existence of a piezoelectric or ferroelectric material or, for its propagation, the existence of a material that allows an acoustic vibration to be transmitted in that frequency range from the ferroelectric or piezoelectric material.

In addition to the range of frequencies used (KHz for conventional ultrasound and generally MHz for AWs) and an operating principle based on having piezoelectric or ferroelectric materials integrated over the entire surface of the system to be thawed, another essential difference of the physical principles of its operation is that while the ultrasound transmitted in conventional materials exclusively causes mechanical oscillations therein, the AWs generated and transmitted in piezoelectric or ferroelectric materials cause both mechanical oscillations and local polarisation electric fields of an oscillating nature due to the direct and inverse piezoelectric effects, respectively. Both physical mechanisms are used to produce the phenomenon of exposed thawing or anti-icing, as well as other effects such as the removal of bacteria or viruses from room temperature to low temperatures or anti-stain effects of organic substances.

One important element of the present invention that makes it resemble the procedures based on the Joule effect is that of surface integration, a concept that implies that electrodes, detection systems and all the electromechanical elements required to generate and detect AWs are integrated in the surfaces where thawing is to occur, covering them in their entirety. AW generating devices extended on the same ferroelectric or piezoelectric substrate to be activated have not been used to promote ice removal, but are used in a localised manner for a wide variety of industrial applications, information technologies and the development of actuators and sensors.

It should be noted that one additional feature of the present invention is the ability to use the same AW excitation device to act as a detector of the resonance conditions of the system, so that the same superficially integrated elements that serve to generate the high intensity AWs to provoke the thawing process can also be used as detectors of resonance conditions and determine their dependence on temperature and the presence of ice, in other words, allowing their simultaneous use as a sensor. This dual function consequently makes it possible to propose a thawing procedure that can be activated automatically and efficiently by adjusting the frequency of the AWs to the resonance conditions of the system and selecting an excitation intensity around the threshold required for thawing.

Specifically, the device of the invention, intended to cover a surface or substrate on which thawing is to occur, comprises an extensive substrate made of a piezoelectric or ferroelectric material. In different embodiments of the invention, the substrate can be a plate, a sheet or a self-supporting film that are rigid or flexible and have an adaptable size, depending on the application, but always sufficient to induce thawing or prevent the formation of ice on extensive areas on which ice has accumulated.

In the first embodiment of the invention, the substrate is a plate. A plate is considered to be a rigid material with a thickness that can vary between hundreds of microns and a few millimetres.

In a second embodiment of the invention, the substrate is a sheet. A sheet is considered to be a material with a range of thicknesses similar to the plate (hundreds of microns to a few millimetres) and having a flexible nature.

In a third embodiment, the substrate is a self-supporting film. A film is considered to be a flexible material that has a thickness in the range of a few tens of microns and is easily adjustable on any surface or part, even complex shapes. The self-supporting film may even comprise an adhesive side, so that it adheres perfectly to the surface on which the formation of ice is to be prevented, even if that surface is not flat.

The device comprises electrodes that are connected to the piezoelectric or ferroelectric substrate and can be extensive and continuous or interdigitated, metallic in nature or made of transparent conductive materials. These electrodes, subjected to an AC electrical signal, produce an AW in the ferroelectric or piezoelectric substrate, and at the same time allow ice accumulated on its surface to be detected.

The extensive and continuous electrodes are always grouped in pairs and generate fronts of standing Lamb AWs. In the prior art, it is known that an interdigitated electrode is used to generate Rayleigh surface waves, integrating two sets of tracks having a micrometric width that are lithographed on the substrate without intersecting like the teeth of two interspersed track "combs". Typically one of the track combs of the electrode is connected to the active pole of the AC electrical excitation signal voltage and the other is grounded. If two interdigitated electrodes are used with the previously described architecture and are conveniently oriented one in front of the other, a front of standing Rayleigh AWs can be generated between them.

In a preferred aspect of the invention, the electrodes cover only certain areas of the piezoelectric substrate and only on one side, which provides great flexibility and simplifies the manufacturing of the device.

Associated with the electrodes, the piezoelectric anti-icing device is controlled with an electronic unit comprising a vector network analyser, configured to determine the resonant frequency of the piezoelectric or ferroelectric substrate. The resonance conditions of the substrate change due to the influence of parameters/phenomena such as temperature, water accumulation or ice formation caused by a modification of the elastic properties of the substrate. Such modification results in a change in the resonant frequency of the substrate, a change that is detected with the vector network analyser.

The electronic unit also comprises an excitation module, which includes a function generator and a signal amplifier that are connected to the electrodes and to the vector network analyser, configured to generate a controllable and frequency-modulable AC electrical signal having a low voltage that, once amplified, is applied to the electrodes in the form of an AC electrical signal having a high peak-to-peak voltage and a frequency that coincides with the resonant frequency of the piezoelectric substrate.

The excitation of the piezoelectric or ferroelectric substrate by applying an AC electrical signal tuned to the resonant frequency detected for each working condition of the device (typically in the MHz range) and high voltages of the order of tens of volts generates the AWs that, as a result of their interaction with ice, cause said ice to partially melt, preferably in the interface area, and eventually detach from the surface with minimal energy cost. The same device, subjected to much milder excitation conditions, is also effective in preventing or limiting the formation of ice on its surface from environmental humidity, subcooled water (below 0°C) or ice particles present in the environment.

Since the function generator and the vector network analyser are connected to the piezoelectric or ferroelectric substrate, the frequency of the activation AC electrical signal is automatically adjusted so that it coincides with the maximum resonance of the piezoelectric substrate at all times. This adjustment is made automatically after determining the resonant frequency for each instant of the thawing process during which the dynamically generated temperature changes, as well as the water-ice fraction, will cause a parallel change in the resonance conditions of the device.

Both thawing and anti-icing applications of the device object of this invention are carried out by applying an AC electrical signal to the proposed device, requiring less power for the anti-icing function than for the function of thawing and removing ice accumulated on the surface. Typical indicative, but non-limiting, values of threshold power required for an effective anti-icing function range around 0.4 W cm⁻², while threshold power values of around 1.2 W cm⁻² are required to effectively thaw ice aggregates accumulated on the surface.

In one aspect of the invention, the device additionally comprises an automatic switching unit, connected between the function generator and the electrodes or between the vector network analyser and the electrodes, which makes it possible to either measure the resonance characteristics of the piezoelectric or ferroelectric substrate or apply the required high intensity AC electrical signal to it.

In one aspect of the invention, the piezoelectric or ferroelectric substrate may comprise a hydrophobic or hydrophilic surface functionalisation against water. A surface hydrophobic nature may contribute to the separation of partially melted ice on the interface. In addition, other external layers can be incorporated on the substrate that provide them with anticorrosive properties, hydrophobicity, antibacterial properties, etc.

In another aspect of the invention, the substrate can have a large surface, in this case integrating a large number of electrodes in order to achieve effective excitation with AWs of large materials having a large surface area. In that case, when using continuous electrodes, they would be grouped in pairs and connected in parallel to the excitation module and grounded, preferably through conductive lines silk-screen printed on the surface. Likewise, it would be enough for the vector network analyser to only be connected to a pair of electrodes to monitor the resonance conditions of the substrate. The distribution in pairs is compatible with interdigitated electrodes, although in this case it is also possible not to face them and generate non-standing AWs.

In another aspect of the invention, the substrate comprises an adhesive side, so that it can be fixed to any part or base material on which thawing is to occur or the formation of ice is to be prevented.

Regarding the documents of the prior art, the present device is based on the generation of acoustic waves, of either the Lamb or Rayleigh surface wave type or similar, electrically exciting a large substrate made of piezoelectric or ferroelectric material with an AC electrical signal, preferably in the MHz range. To do this, the surface of the substrate made of piezoelectric or ferroelectric material can be completely exposed to the environment and covered with ice, and the electrodes can be deployed over defined areas of the same or even hidden from the outside on the underside, protected from interaction with the environment.

Another differentiating element of the present invention is the inclusion of a vector network analyser, which automatically tunes the resonance conditions of the substrate. The resonance conditions of piezoelectric or ferroelectric substrates are very sensitive to both temperature and the presence or absence of water or ice accumulations on their surface. In the present invention, the optimal resonance conditions are tuned due to the vector network analyser used to interrogate and determine the attenuation spectrum of the piezoelectric or ferroelectric substrate and due to the feedback and automatic adjustment of the frequency and intensity of the excitation signal applied to it through the assembly formed by the function generator and amplifier.

Another essential difference is that while in other prior art documents the ultrasound generated by external applicators causes mechanical oscillations in the excited non-piezoelectric materials that do not translate into surface electrical polarisation phenomena, in the piezoelectric or ferroelectric substrate of the present invention both mechanical oscillations and oscillating local electric fields are generated on its surface, due to what are known in physics as direct and inverse piezoelectric effects, respectively.

Furthermore, one essential difference is that the proposed device is dual and integrates functions of detection acting as a sensor, due to the vector network analyser, and feedback to the function generator/amplifier assembly in order to excite the piezoelectric substrate assembly and consequently remove accumulated ice.

It should be noted that the detection of resonance conditions using the vector network analyser makes it possible to determine the amount of accumulated ice or the presence of water and ice, as well as establish the optimal resonance conditions to maximise energy performance in the excitation processes to achieve thawing. The fact that the resonance signal detected in the vector network analyser of the device is affected by temperature and can be used to measure this parameter is not mentioned in the prior art.

Given the proposed integration of electronic components, the function generator allows tuning the frequency of the high-voltage AC electrical signal generated by the amplifier and adjusting its intensity based on the setpoint determined by the vector network analyser, in order to optimise the excitation process and minimise the energy consumption required for thawing.

Furthermore, the present invention based on short-wavelength acoustic waves, preferably in the MHz range, generated in piezoelectric or ferroelectric materials with electrodes integrated in the surface makes it possible to overcome the main problems of classic ultrasound technology in the kHz range, such as the "focused" nature of the excitation from an external generator(s), its damping upon separation from the excitation source by small distances, or the need to have to move the generator or actuator or place several generators if ice is to be removed from large areas or surfaces. Energy cost is another factor that may discourage extensive use of this technology.

In relation to the publication *Advanced Materials Interfaces* mentioned in the background section, the device object of the present invention differs from the concept specified in this scientific publication in essential elements such as the following:
i) ZnO has only a piezoelectric, but not ferroelectric, nature, where the present invention covers a broader set of materials.
ii) The system described in the aforementioned publication relates to a thin layer of ZnO deposited on an aluminium substrate and does not take into account the development of ice removal systems on layers, sheets or self-supporting films where the excitation of acoustic waves can be both Rayleigh surface waves and Lamb waves, the latter affecting the entire layer, sheet or self-supporting film. For these substrates, although interdigitated electrodes can also be used to generate Rayleigh surface waves, it is possible to use simpler continuous electrodes placed not on the outer surface where thawing occurs, but on the inner side. These continuous electrodes can be deposited in the form of a thin layer on the surface of the substrate, but can also be used in the form of a conductive paint or a metal sheet applied directly to the plate, sheet or self-supporting film. The fact that the electrodes in this case can be applied to the hidden side of the plate, sheet or self-supporting film is another advantage that does not apply to interdigitated electrodes, as it does not require protecting the hidden electrodes from interaction with the environment.
iii) The present invention envisages that the plate, sheet or self-supporting film has either a small area where it is enough to apply two extensive and continuous electrodes to achieve the desired effect of thawing or limiting ice formation, or a large area where it is necessary to integrate pairs of electrodes connected in parallel to achieve an effective result over the entire area to be protected from ice. The aforementioned publication does not envisage the possibility of extending the effect of surface acoustic waves to large areas and, therefore, the possibility of using a multiple electrode system. Furthermore, it is implicitly deduced from the publication that only a single interdigitated electrode is used, which makes it impossible to generate standing waves of controllable intensity over the entire area of the substrate and results in an excitation that will gradually attenuate with distance until it disappears. In one embodiment of the present invention, the use of pairs of electrodes, either extended or interdigitated, is proposed in order to generate Lamb or Rayleigh waves, respectively, of a standing nature and homogeneous intensity over the entire area of the substrate. The use of self-supporting piezoelectric substrates would also be compatible with their excitation with a single or several interdigitated electrodes not coupled in parallel, in which case no standing waves would be generated.
iv) Another element of the present invention that is not envisaged in the aforementioned publication arises from the fact that the resonance conditions of the plate, sheet or self-supporting film are very sensitive to the temperature conditions of the environment and to the very formation of ice and, in order to optimise energy performance for thawing processes and a more effective anti-icing effect, it is necessary to dynamically adjust the frequency of the excitation signal to the intrinsic resonant frequency of the system. In the aforementioned publication, although it is verified that the formation of ice on the surface causes a change in the resonance conditions, no dynamic method is developed to adjust the excitation frequency to the conditions of the resonance maximum in each case, with the obvious energy losses that this implies.
v) The resonant frequency used by interdigitated electrodes as in the reference publication is conditioned by the morphological characteristics of the electrodes (size and thickness of the tracks, number, way in which they are distributed, etc.) so that once deposited on the surface of ZnO, they define and therefore limit the resonance conditions. The use of continuous electrodes as described in one of the embodiments of the present invention allows working in several resonance areas of the device, including overtones at multiplier frequency values, thus not conditioning the type, characteristics and working range of the electronics to be used to achieve the thawing effect or activation of anti-icing capacity. This condition would allow, where appropriate, the resonant frequency to be adjusted to one of the free frequency intervals compatible with the range of radio emissions.

### DESCRIPTION OF THE DRAWINGS

As a complement to the present description, and for the purpose of helping to make the features of the invention more readily understandable, in accordance with a preferred practical exemplary embodiment thereof, said description is accompanied by a set of drawings and figures constituting an integral part of the same, which by way of illustration and not limitation represent the following:
Figure 1A shows a schematic view of the substrate made of piezoelectric or ferroelectric material with a pair of electrodes.
Figure 1B shows a schematic representation of the device in a first embodiment of the invention, with the substrate made of piezoelectric or ferroelectric material that is completely exposed and the pair of metal electrodes covering part of the opposite side.
Figure 1C shows the front and side diagrams of the arrangement of a pair of interdigitated electrodes deposited on the side of the piezoelectric or ferroelectric substrate exposed to the accumulation of ice.
Figure 2A) shows a series of S11 return loss spectra determined using a vector network analyser for the device shown in Figure 1B for several measured temperatures. Figure 2B) shows the same with the presence of a drop of water on its surface.
Figure 3A) shows an applicable example where an ice particle on a LiNbOs plate, with piezo and ferroelectric properties and excited with AWs, gradually melts. Figure 3B) shows a thermally produced melting effect represented for comparative purposes.
Figure 4 shows an applicable example where an ice particle on a LiNbOs plate in a vertical position slides gradually when the plate is excited with AWs.
Figure 5A shows the front diagram of the substrate holder with an active substrate and another substrate of reference to verify the anti-icing capacity of the AWs.
Figure 5B shows the profile diagram of the substrate holder, the collimator and the wind tunnel used to verify the anti-icing capacity of the AWs.
Figure 6 shows the values of the resonant frequencies determined from the minimums of the S11 return loss spectra measured and represented as a function of temperature for successive cooling, freezing, heating and thawing processes.

### PREFERRED EMBODIMENT OF THE INVENTION

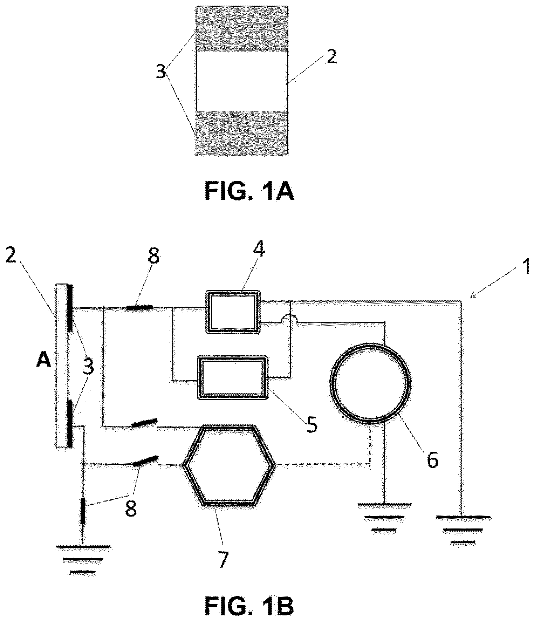

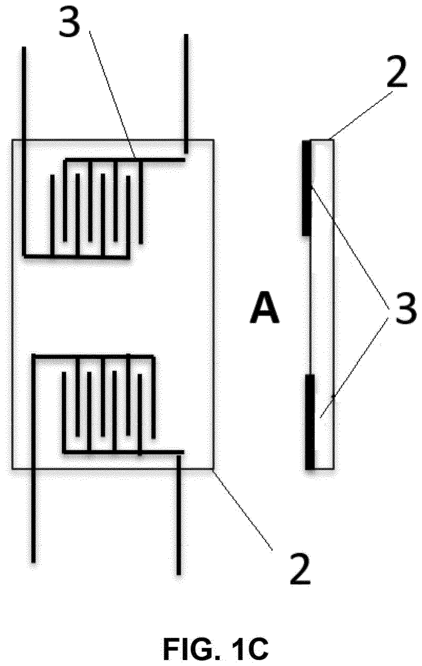

Preferred embodiments of the device (1) for removing ice on surfaces or preventing its formation are described below, with the help of Figures 1 to 5B.

The device (1) of the invention defines a surface on which thawing is to occur. In a first embodiment, shown in Figures 1A and 1B, the device (1) comprises a piezoelectric or ferroelectric substrate (2), intended to be attached to the surface. The substrate (2) can be a sheet, a plate or a self-supporting film of a piezoelectric or ferroelectric nature (a ferroelectric material is also piezoelectric, but not vice versa). The substrate (2) can be made of materials such as:
- inorganic materials such as LiNbOs, LiTaOs, BaTiOs, KNbOs, PbTiOs, PZT (lead zirconate titanate), PZN-PT (Pb(Zn_{1/3}Nb_{2/3})O₃-PbTiO₃), PMN-PT ((1 - x)Pb(Mg_{1/3}Nb_{2/3})O_{3 - x}PbTiO₃), HfO₂, ZnO, AZO (aluminium zinc oxide) or AIN, inter alia, in mono- or polycrystalline form,
- polymeric materials such as those known as PVDF (polyvinylidene fluoride) or its copolymer PVDF-TrFE (polyvinylidene fluoride-trifluoroethylene).

Ice accumulates on a first side (A) on the substrate (2). On an opposite side of the substrate (2) and covering the ends, a very thin metal layer is deposited in the form of two continuous electrodes (3) in order to generate standing Lamb mass acoustic waves and homogeneous intensity over the entire area of the substrate.

The surface of the piezoelectric or ferroelectric substrate (2) can be functionalised so that it has a hydrophobic or hydrophilic response to water, as suitable to promote better sliding of the half-melted ice that is formed from ice during the thawing process induced by the AWs.

In a second embodiment of the present invention, shown in Figure 1C, the pair of electrodes (3), either flat or in the form of interdigitated electrodes (3), are placed on a side (A) of the piezoelectric or ferroelectric substrate (2) on which ice has accumulated. This arrangement ensures the formation of standing waves with a homogeneous intensity over the entire surface of the substrate.

This second embodiment, especially when the interdigitated electrodes (3) are used, is especially favourable for generating Rayleigh surface acoustic waves or similar, which would not have a standing nature if a single interdigitated electrode were used.

To generate standing surface waves on the substrate using pairs of interdigitated electrodes, depending on their design and following the prior art, the electrical connection can be made with the active pole and the grounding pole on both electrodes or only on one of them, the opposite acting as a reflector.

The mode of operation of the device in this configuration is fully equivalent to that of Figure 1B, except for the fact that the pair of electrodes (3) are located on the surface exposed to the external environment (Figure 1C) and therefore must be protected to prevent corrosion or wear thereof. One easy way to provide protection is to deposit a thin layer of a dielectric material such as SiO₂ or a polymeric material (such as PDMS) in a range of thicknesses from a few hundred nanometres to a few microns on the area where said electrodes (3) are located (for example, by using a mask).

One variant of the two previous embodiments consists of covering part of the side (A) on which thawing is to occur with a coupling layer that has good characteristics for transmitting the AWs, in other words, although it does not have a piezoelectric or ferroelectric nature and cannot generate them, it has the unique property of having a high capacity to transmit them from the piezoelectric or ferroelectric substrate. These coupling layers may also have anti-corrosion, anti-abrasion or hydrophobic/hydrophilic characteristics to improve the response of the device to environmental conditions.

In either of the two embodiments, the device (1) further comprises an electronic unit comprising a vector network analyser (7), connected to the electrodes (3) and grounded, configured to determine the resonant frequency of the plate or sheet (2).

Moreover, the electronic unit comprises an excitation module that includes a function generator (6) connected to a signal amplifier (4) and that can be monitored using an oscilloscope (5). The excitation module, shown in detail in Figure 1B, is connected to one of the electrodes (3) and grounded and to the other electrode in the case of continuous electrodes. In the case of interdigitated electrodes, the connection would be made to one of the two track "combs" that integrate it and to the other grounded "comb", respectively (Figure 1C).

The signal amplifier (4) acts by amplifying the voltage of the signal or function supplied by the function generator (6), giving rise to an AC electrical excitation signal characterised by a peak-to-peak voltage that can reach values between 20 and 200 V at the same resonant frequency of the signal determined by the function generator (6). The AC electrical excitation signal is applied to the electrodes (3), this signal coinciding with the resonant frequency of the plate or sheet (2) determined by the vector network analyser (7).

Furthermore, as shown in Figure 1B, the electronic unit comprises an automatic switching unit (8), which alternates the connection by electrically joining the electrodes (3), grounding and the vector network analyser (7) or the signal amplifier (4), the electrodes and grounding (3). This alternation makes it possible to alternatively measure the resonance conditions with the vector network analyser (7) or apply the high-voltage AC electrical signal with the excitation module.

Since the vector network analyser (7) and the function generator (6) are connected, in the event that changes occur in the resonant frequency due to the accumulation of ice, its partial or total melting, temperature changes, etc., these changes result in immediate changes in the frequency of the excitation signal which, to optimise the energy performance of the device, must be tuned at all times to the resonant frequency of the system.

The same device (1) allows the formation of ice accumulated on the surface of the piezoelectric or ferroelectric substrate (2) to be detected. This accumulation produces an alteration in the elastic and/or electrical (electromechanical) properties of the piezoelectric or ferroelectric substrate (2), which results in a change in the resonant frequency, a change that can be detected by the vector network analyser (7).

Next, in the following examples, specific cases are shown that demonstrate how the device (1) of the present invention can be used effectively to thaw and remove ice accumulated on the surface of a piezoelectric or ferroelectric substrate designed to be excited by AWs. Specifically, it is disclosed how the generation of a specific AW causes the partial melting of ice aggregates accumulated on the surface that, depending on the orientation relative to the plane of the piezoelectric or ferroelectric substrate and/or the hydrophilic or hydrophobic characteristics of its surface, can slide off the material, leading to the removal of ice without having to achieve its complete melting. In parallel experiments, it was also possible to verify its high efficiency in removing bacteria or viruses grown on its surface, even in low temperature conditions and/or in ice accumulations.

A series of steps for using the device (1) in a specific embodiment in which the substrate (2) is a LiNbOs plate are described below:
- a 5µl drop of water is left on the surface of a LiNbOs plate at room temperature,
- room temperature is lowered to -5°C or lower values, and there is a wait until the drop of water freezes completely. A thermocouple is positioned on the surface of the plate (2) to verify that it has reached the temperature of -5°C in the outside environment. The freezing of water gives rise to an ice particle with a characteristic shape different from the drop of water. The thermocouple is removed from the surface,
- the resonant frequency of the plate equipped with electrodes (3) and electrically connected as indicated in Figure 1B is measured with the vector network analyser (7),
- this resonant frequency is selected with the function generator (6) and a setpoint signal is generated with the function generator (6) which is sent to the amplifier (4), according to the electrical connection diagram in the figure. The voltage of the output signal is adjusted and the oscilloscope (5) is used to verify that there is no distortion in the signal applied to the plate,
- the evolution of the ice particle as a function of time is filmed. During this process, the switching module (8) can induce small changes in the excitation frequency in order to adjust to possible changes in the resonant frequency of the system, and
- at the end of the process, the activation by AWs is stopped and the temperature of the surface of the plate is measured by once again putting the surface in contact with the retractable thermocouple.

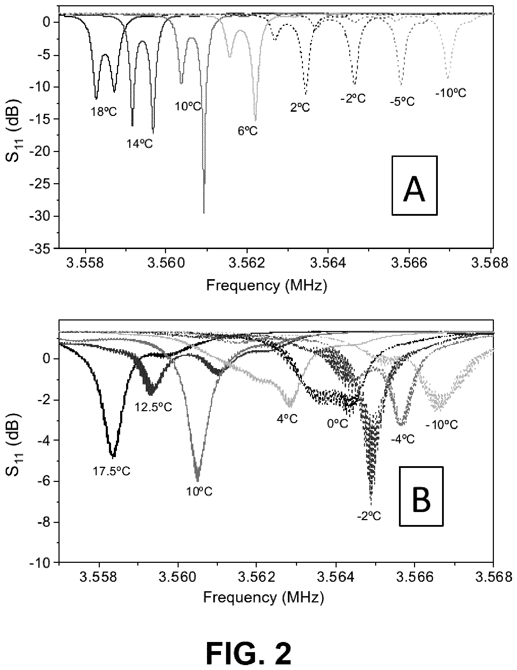

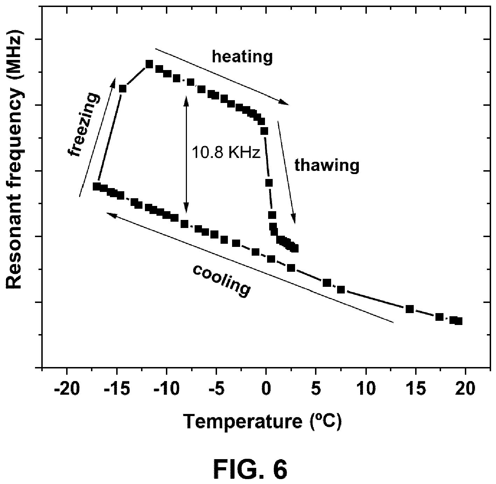

Figure 2 shows the dependence of the resonance conditions of the device (1), determined with the vector network analyser (7) as a function of operating parameters such as temperature (Figure 2A), the presence of a drop of water and the transformation of this drop of water into ice (Figure 2B), and the evolution of the response from the vector network analyser (7) with cooling, the freezing process, subsequent gradual heating and melting by thawing of this drop of water (Figure 6).

As shown in Figure 6, during cooling, the resonant frequency increases according to the normal behaviour of a piezoelectric material. In freezing, a sudden increase in the frequency occurs since the drop of water transforms into ice. Finally, during heating, in which the temperature is allowed to rise naturally, a normal evolution of the resonant frequency with the temperature occurs until reaching the melting point of ice, when the resonant frequency falls until it reaches the initial curve. This data has been obtained from a 10µl drop on a LiNbOs surface. It is evident that changes in these operating conditions cause significant alterations in the resonance conditions of the system that can be used as a sensing procedure for sensing temperature changes and ice formation.

For example, Figure 2A shows that the decrease in temperature causes a change in the shape of the resonance peaks, some changes in their overall intensity and a gradual shift of the loss spectrum to higher frequency values. The shape of the spectra is altered by the presence of a drop of water on the surface and the water-ice transformation between -2 and -4°C, which is represented in Figure 2B by a significant change in the resonance shape and pattern, although in this case there is also a systematic shift of the resonance to higher frequencies as the temperature decreases. The changes in the resonant frequency are summarised in Figure 6, which also shows how hysteresis phenomena exist in the freezing and thawing processes (associated with the known "freezing delay" phenomena).

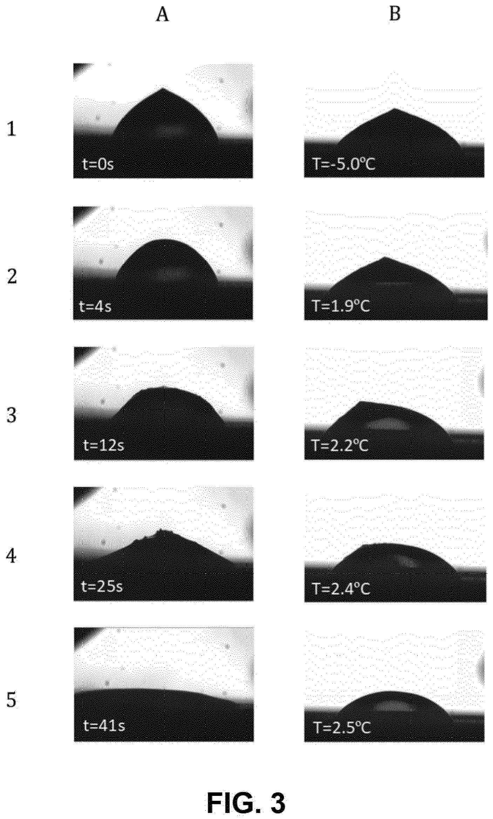

Figure 3 shows the melting of an ice particle deposited on a substrate (2), which in this case is a ferroelectric LiNbOs plate activated with AWs. Specifically, this applicable example shows the melting process of an ice aggregate deposited on a ferroelectric LiNbOs plate integrated in a device (1) like the one described in Figure 1B.

Under these conditions, the vector network analyser (7) was used to determine that the initial resonant frequency of the system was 3.566 +-0.025 MHz. After activating and tuning the generation of AWs to excite the plate with an AC electrical signal having a tuned frequency as described in Figure 1B, it was verified that the ice aggregate undergoes a thawing process that can be followed by optical inspection with a lens or recorded with a camera.

The results of this process are shown on the left in Figure 3, where the transformation of ice to its liquid water state is observed after 41 s of activation. After this process, it was verified that the surface temperature of the plate (2) had only undergone a temperature increase from -5°C at the beginning of the experiment to 0°C, insufficient to induce the observed solid-liquid transformation.

The direct effect of AWs on the melting process was additionally demonstrated with the experiment represented on the right in Figure 3, where an ice particle similar to the previous one and deposited on the same LiNbOs plate is gradually heated to 2.5°C, in other words, its melting is induced by the Joule effect.

This figure shows that the ice undergoes a gradual melting process, which, induced by the Joule effect, is extraordinarily slow, requiring a total time of 6 minutes to achieve the total transformation into liquid water. The notable difference in time required to melt the ice particle in each case and the different profile of the ice-water mixture in the melting process clearly demonstrate that the AWs propagated in a piezoelectric substrate play an effective and unique role in the ice-water transformation process.

In the experiment in Figure 3, the resonant frequency of the device (1) was determined at the beginning of the experiment, where a change in the resonance conditions of the device to higher frequency values at the end of the melting process could be verified with the network analyser (7), as deduced from Figure 2B. By systematically adjusting the excitation frequency throughout the melting process, the ice was melted with a relatively low nominal excitation power, characterised by peak-to-peak excitation voltages of exclusively ±15 V, compared to peak-to-peak AC electrical excitation signal voltages of ±50 V required if the frequency was only adjusted initially and not tuned continuously during the melting process.

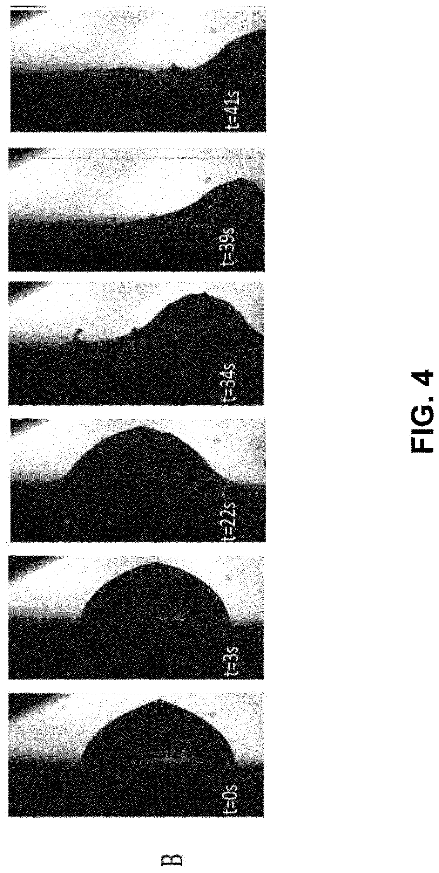

Figure 4 shows the sliding of ice on a piezoelectric plate (2) activated by AWs. Specifically, this applicable example demonstrates that the acoustic waves, in addition to promoting an accelerated ice-water transformation as demonstrated in the previous example, can induce the surface sliding of ice-water aggregates resulting from partial melting of ice particles. This mechanism is beneficial by promoting the removal of ice from the surface without the need to induce its total melting.

In this applicable example, the procedure was analogous to that in the previous example, but placing the piezoelectric plate in a vertical position. The evolution of the ice particle as a function of activation time with the AWs was filmed. The initial resonant frequency in this case was 3.567 +-0.025 MHz and the voltage defined by the amplitude of the peak-to-peak activation signal varied from ±15 to ±50 V, depending on whether or not the resonant frequency of the AC electrical excitation signal was tuned during the melting process and sliding.

The images shown in Figure 4 represent the evolution of the ice aggregate for different consecutive periods of the activation process up to a maximum time of 41 s, equivalent to that required in the first example. In this case, the series of images show an initial stage (t=22 s) where partial melting of the ice is observed and, next, downward sliding of the water-ice assembly until the virtual disappearance of the observation field for an activation time of 41 s.

An additional experiment was also conducted to test the effectiveness of the device (1) of Figure 1 to prevent or limit the formation of ice layers or aggregates on its surface (anti-icing function). This additional embodiment of the invention was carried out in a wind tunnel with precise control of the following operating parameters:
- air speed: 25 and 70 m s⁻¹
- average size of the drops of subcooled water: 20 microns
- temperature: -5°C
- liquid water content in the air flow: 0.2 g m⁻³

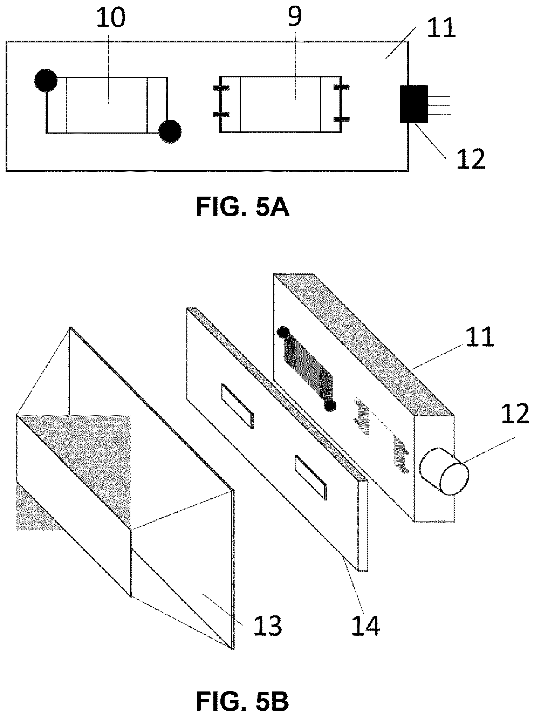

As shown in Figures 5A and 5B, a piezoelectric substrate activated with AWs (9) similar to the substrate (2) of the device (1) of the invention was used, and an equivalent substrate without activation (10) was used as a reference system. Both substrates (9, 10) were placed on a substrate holder (11) equipped with electrical connections (12) to activate the AWs and, where appropriate, connect a thermocouple.

The substrate holder (11) was placed in the centre of a test chamber (13) (15x15 cm²) in a position normal to the air flow. A collimator (14) with two equivalent diaphragms or collimators placed at a distance of 33 cm from the substrate holder (11) to collimate the air flow and drops over a defined area of the surface of both substrates (9, 10).

Under these conditions, using a peak-to-peak activation voltage of ±25 V, at a resonant frequency of 3.4016 MHz and an air speed of 70 m s⁻¹, the ice aggregate formed on the substrate activated with AWs (9) was approximately 60% smaller than that formed on the equivalent substrate without activation (10) used as a reference.

It should also be noted that when increasing the peak-to-peak excitation voltage to ±40 V and with an air speed of 25 m s⁻¹, no type of ice is formed on the substrate activated with AWs (9), leaving some drops of liquid water on it, whereas a considerable accumulation of ice did form on the reference substrate without activation (10).

## Claims

1. A device (1) for removing and/or preventing the formation of ice on surfaces, based on the generation of short-wavelength acoustic waves (AWs), which comprises:
- a substrate (2) made of a piezoelectric or ferroelectric material, the substrate (2) having one of its sides (A) exposed to the environment,
- one or more electrodes (3), deposited on the substrate (2),
- a vector network analyser (7), connected to the electrodes (3), and configured to determine the resonant frequency of the substrate (2),
- an excitation module, connected to the electrodes (3) and grounded, comprising a function generator (6) and a signal amplifier (4), where the function generator (6) is in communication with the vector network analyser (7), the excitation module being configured to apply an AC electrical signal in the MHz frequency range to the electrodes (3), the frequency of said signal coinciding with the resonant frequency of the substrate (2) measured with the vector network analyser (7), and
- an automatic switching unit (8), connected alternatively between the excitation module and the electrodes (3) or between the vector network analyser (7) and the electrodes (3).

2. The device (1) of claim 1, wherein the substrate (2) is made of a piezoelectric material.

3. The device (1) of claim 1, wherein the substrate (2) is made of a ferroelectric material.

4. The device (1) of claim 1, wherein the substrate (2) is a plate.

5. The device (1) of claim 1, wherein the substrate (2) is a sheet.

6. The device (1) of claim 1, wherein the substrate (2) is a self-supporting film.

7. The device (1) of claim 1, wherein the substrate (2) on one side exposed to the environment (A) is functionalised to have a hydrophobic or hydrophilic nature.

8. The device (1) of claim 1, wherein the substrate (2) is made of a material selected from LiNbO₃, LiTaO₃, BaTiO₃, KNbO₃, PbTiO₃, PZT, PZN-PT, PMN-PT, HfO, ZnO, AZO, AIN, PVDF, PVDF-TrFE.

9. The device (1) of claim 1, comprising two or more electrodes or pairs of electrodes (3) that are activated by connecting them in parallel to the excitation module, and the vector network analyser (7) being connected to one of the pairs of electrodes (3) through an automatic switching unit (8).

10. The device (1) of claim 1, wherein the substrate (2) additionally comprises an adhesive layer, on a side opposite to the side (A) exposed to the environment.

11. The device (1) of claim 1, wherein the electrodes or pairs of electrodes (3) are interdigitated electrodes.

12. The device (1) of claim 1, wherein the pairs of electrodes (3) are extensive and continuous electrodes.

13. The device (1) of any of claims 11 or 12, wherein the electrodes (3) are arranged on the side (A) of the substrate (2) exposed to the environment.

14. The device (1) of claim 12, wherein the electrodes (3) are arranged on a side of the substrate (2) opposite to the side (A) intended to be exposed to the environment.

15. The device (1) of any of claims 11 to 14, additionally comprising a protective layer of a dielectric material deposited on the electrodes (3).
